# EUROPEAN PATENT APPLICATION

(11) **EP 1 026 907 A1**
(43) Date of publication of application: **09.08.2000**
(21) Application number: 99931536.9
(22) Date of filing: 26.07.1999
(51) Int. Cl.: H04Q 7/30, H04Q 7/32

(54) **BASE STATION DEVICE AND RADIO COMMUNICATION METHOD**

(30) Priority: 27.07.1998 JP 21145898
(71) Applicant: MATSUSHITA ELECTRIC INDUSTRIAL CO., LTD., Kadoma-shi, Osaka 571-8501 (JP)
(72) Inventor: HIRAMATSU, Katsuhiko, Yokosuka-shi, Kanagawa 239-0831 (JP)
(74) Representative: Grünecker, Kinkeldey, Stockmair & Schwanhäusser Anwaltssozietät
(86) International application number: JP9903990
(87) International publication number: WO0007394

(57) **Abstract**

Directivity control determination circuit 116 determines whether a target communication station and another communication station are located relatively close to one another and if the target communication station and said other communication station are located close to one another, selector 113 selects a single communication directivity from among communication directivities of the target communication station and the other communication station, and weighting factor multiplier 104 controls so that the communication directivity toward the target communication station becomes the selected single communication directivity.

## Description

### Technical Field

The present invention relates to a base station apparatus and radio communication method used in a digital radio communication system.

### Background Art

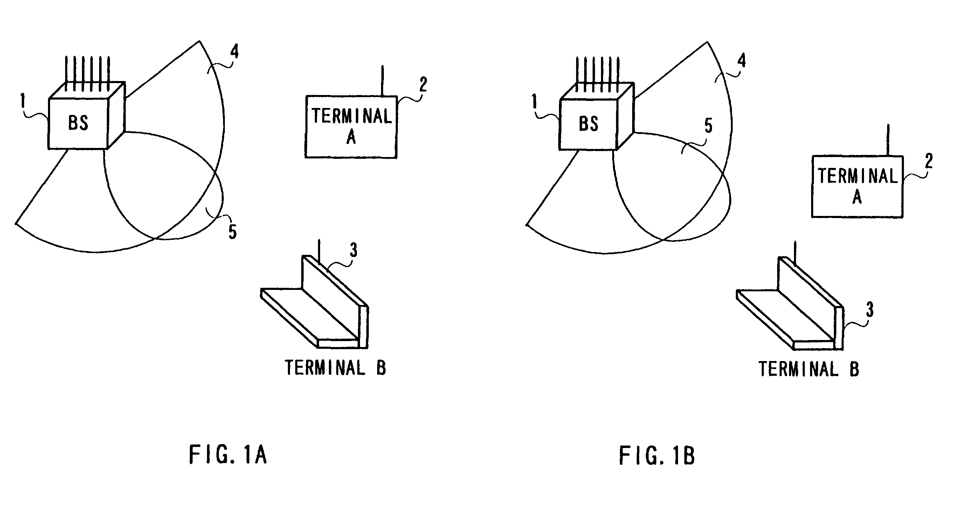

A conventional base station apparatus is explained with reference to FIG.1.

FIG.1 is a conceptual diagram of a digital radio communication system. FIG.1A shows a case where terminal apparatus A2 and terminal apparatus B3 are located far from one another when viewed from base station apparatus 1 and FIG.1B shows a case where terminal apparatus A2 and terminal apparatus B3 are located close to one another when viewed from base station apparatus 1.

As shown in FIG.1A and FIG.1B, the conventional base station apparatus transmits signals requiring only small transmission power such as low-speed data and voice with wide directivity 4 and signals requiring large transmission power such as high-speed data with narrow directivity 5. Here, base station apparatus 1 transmits low-speed data to terminal A2 with small transmission power and wide directivity 4, and high-speed data to terminal B3 with large transmission power and narrow directivity 5.

Thus, a digital radio communication system confines signals with large transmission power, that is, signals that greatly interfere with other users in a small space or narrow directivity 5, thus suppressing interference with other communication apparatuses and increasing the channel capacity for subscribers.

However, in the conventional base station apparatus, if terminal apparatus A2 and terminal apparatus B3 are located in almost the same direction when viewed from base station apparatus 1, that is, when terminal apparatus A2 and terminal apparatus B3 are close to one another as shown in FIG.1B, a transmission signal from base station apparatus 1 to terminal apparatus A2 overlaps another transmission signal from base station apparatus 1 to terminal apparatus B3. In this case, since the transmission signal from base station apparatus 1 to terminal apparatus B3 has large transmission power, there is a problem that the communication quality of the transmission signal from base station apparatus 1 to terminal apparatus A2 deteriorates drastically.

### Disclosure of Invention

It is an objective of the present invention to provide a base station apparatus and radio communication method capable of carrying out a high-quality communication with a communication apparatus carrying out a communication with small interference, even if the communication apparatus carrying out a voice communication, etc. with small interference with other communication apparatuses is located in the same direction as another communication apparatus carrying out a high-speed communication, etc. involving large interference with other communication apparatuses.

This objective can be achieved by a base station apparatus that determines whether a target communication station is relatively close to another communication station or not, and if the target communication station is relatively close to the other communication station, selects a single communication directivity from among the communication directivity toward the target communication station and the communication directivity toward the other communication apparatus, and controls the communication directivity toward the target communication station and the communication directivity toward the other communication apparatus so that both communication directivities become the selected single communication directivity.

### Brief Description of Drawings

FIG.1A and FIG.1B are conceptual diagrams showing a positional relationship between a base station apparatus and terminal apparatuses, and communication directivities;
FIG.2 is a block diagram showing an overall configuration of a base station apparatus according to Embodiment 1 of the present invention;
FIG.3A and FIG.3B are conceptual diagrams showing a positional relationship between the base station apparatus and terminal apparatuses, and communication directivities;
FIG.4 is a block diagram showing an overall configuration of a directivity control determination circuit of a base station apparatus according to Embodiment 2 of the present invention;
FIG.5 is a block diagram showing an overall configuration of a directivity control circuit of a base station apparatus according to Embodiment 3 of the present invention;
FIG.6 is block diagram showing an overall configuration of a base station apparatus according to Embodiment 4 of the present invention; and
FIG.7 is block diagram showing an overall configuration of a terminal apparatus carrying out a radio communication with the base station apparatus according to Embodiment 4 of the present invention.

### Best Mode for Carrying out the Invention

With reference now to the attached drawings, the embodiments of the present invention are explained below.

### (Embodiment 1)

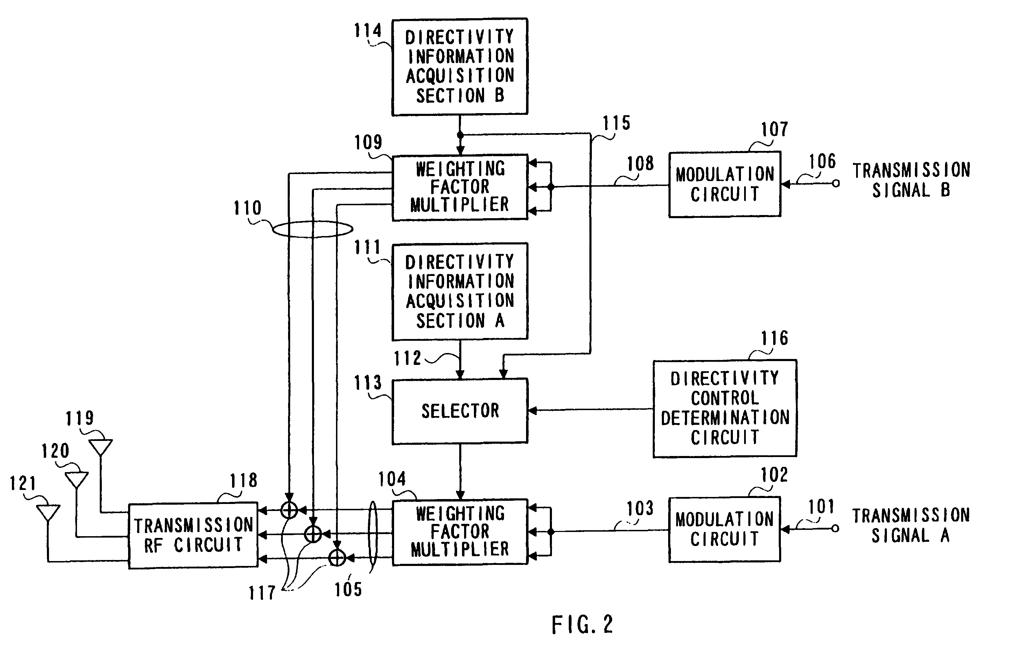

FIG.2 is block diagram showing an overall configuration of a base station apparatus according to Embodiment 1 of the present invention. Transmission signal A101 is converted by modulation circuit 102 from a digital signal to a signal that can be easily transmitted in an analog channel or radio channel. Signal 103 that has been modulated by modulation circuit 102 is multiplied in weighting factor multiplier 104 by a certain weighting factor (normally a complex number) and an output signal from a selector that will be described later. Signal 105 resulting from the multiplication by this weighting factor and the output signal from the selector is output to an adder that will be described later.

Transmission signal B106 is also modulated by modulation circuit 107 and modulated signal 108 is multiplied in weighting factor multiplier 109 by a weighting factor and directivity information input from a directivity information acquisition section that will be described later. Signal 110 resulting from the multiplication by this weighting factor and the directivity information is output to an adder that will be described later.

Directivity information acquisition section 111A acquires information for carrying out directivity transmission about transmission signal A and outputs directivity information 112 to selector 113. Likewise, directivity information acquisition section 114B acquires information for carrying out directivity transmission about transmission signal B and outputs directivity information 115 to selector 113. Selector 113 outputs either one of directivity information 112 or directivity information 115 to weighting factor multiplier 104 based on a control signal from directivity control determination circuit 116 that will be described later.

When the destination of transmission signal A101 is close to the destination of transmission signal B, the directivity control determination circuit 116 controls so that selector 113 outputs directivity information 115. On the other hand, when the destination of transmission signal A101 is far from the destination of transmission signal B, the directivity control determination circuit 116 controls so that selector 113 outputs directivity information 112.

Adder 117 adds up the signals output from weighting factor multipliers 104 and 109 and transmission RF section 118 carries out frequency conversion and amplification on the output signal of adder 117 and transmits this signal from antennas 119 to 121. Embodiment 1 uses three antennas, but the present invention is not limited to this; the number of antennas can be any number greater than 1.

Then, the operation of the base station apparatus according to Embodiment 1 of the present invention configured as shown above is explained below.

Transmission signal A101 is modulated by modulation circuit 102 and input to weighting factor multiplier 104. Selector 113 selects either the directivity of transmission signal A101, that is, directivity information 112 or the directivity of transmission signal B106, that is, directivity information 115 based on a control signal output from directivity control determination circuit 116. Weighting factor multiplier 104 multiplies the output signal of selector 113. That is, weighting factor multiplier 104 multiplies modulated signal 103 by weighting factors of antennas 119 to 121 and forms the directivity of transmission signal A101 to be transmitted from antennas 119 to 121.

On the other hand, transmission signal B106 is modulated by modulation circuit 107 and input to weighting factor multiplier 109. Weighting factor multiplier 109 multiplies transmission signal B106 by directivity information 115. That is, weighting factor multiplier 109 multiplies modulated signal 108 by the weighting factors of antennas 119 to 121 and forms the directivity of transmission signal B106 to be transmitted from antennas 119 to 121.

The signals output from weighting factor multipliers 104 and 109 are passed through adder 117 and subjected to frequency conversion and amplification by transmission RF section 118 and transmitted from antennas 119 to 121.

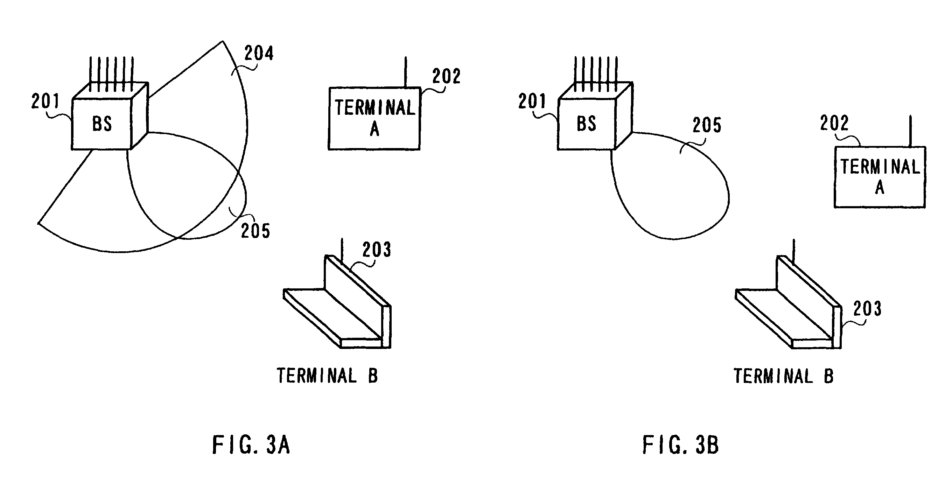

FIG.3 are conceptual diagrams of the base station apparatus according to Embodiment 1 of the present invention. FIG.3A shows a case where terminal apparatus A202 is located far from terminal apparatus B203 in a service area viewed from base station apparatus 201 and FIG.3B shows another case where terminal apparatus A202 is located close to terminal apparatus B203 viewed from base station apparatus 201.

As shown in FIG.3A, when terminal apparatus A202 is located far from terminal apparatus B203, the base station apparatus according to Embodiment 1 of the present invention transmits a signal requiring only small transmission power such as low-speed data and voice with wide directivity 204 and a signal requiring large transmission power such as high-speed data with narrow directivity 205.

Moreover, as shown in FIG.3B when terminal apparatus A202 is located almost in the same direction as terminal apparatus B203 viewed from base station apparatus 201, the base station apparatus transmits both the signal requiring only small transmission power such as low-speed data and voice and the signal requiring large transmission power such as high-speed data with narrow directivity 205.

A spread spectrum communication system assigns a spreading code to each terminal apparatus and transmits transmission data spread using that spreading code. This spread spectrum communication system can communicate with a plurality of terminal apparatuses in a same area and at a same time using a same frequency by adopting codes orthogonal to each other among a plurality of terminal apparatuses as these spreading codes.

Therefore, as shown in FIG.3B, when terminal apparatus A202 is located almost in the same direction as terminal apparatus B203 viewed from base station apparatus 201, base station apparatus 201 transmits transmission signal A toward terminal apparatus A202 and transmission signal B toward terminal apparatus B with same directivity 205. In this case, since the spreading code used for transmission signal A is orthogonal to the spreading code used for transmission signal B in the spread spectrum communication system, it is possible to reduce interference caused by the transmission signal toward terminal apparatus B203 with the transmission signal toward terminal apparatus A202. Thus, even if transmission is performed with narrow directivity 205 to terminal apparatus A202 and terminal apparatus B203, the communication quality of terminal apparatus A202 can be improved as a consequence. Moreover, since transmission is performed with narrow directivity 205, it is possible to reduce interference with other communication apparatuses.

As shown above, according to the base station apparatus of the present embodiment, even if a target communication station carrying out a voice communication, etc. with small interference with other communication apparatuses comes closer to another communication station carrying out a high-speed communication, etc. involving large interference with other communication apparatuses, the target communication station is hardly affected by interference, and in this way the present embodiment can improve the communication quality of a communication station carrying out a voice communication, etc. with small interference with other communication apparatuses.

### (Embodiment 2)

Then, the base station apparatus according to Embodiment 2 of the present invention is explained with reference to the attached drawings.

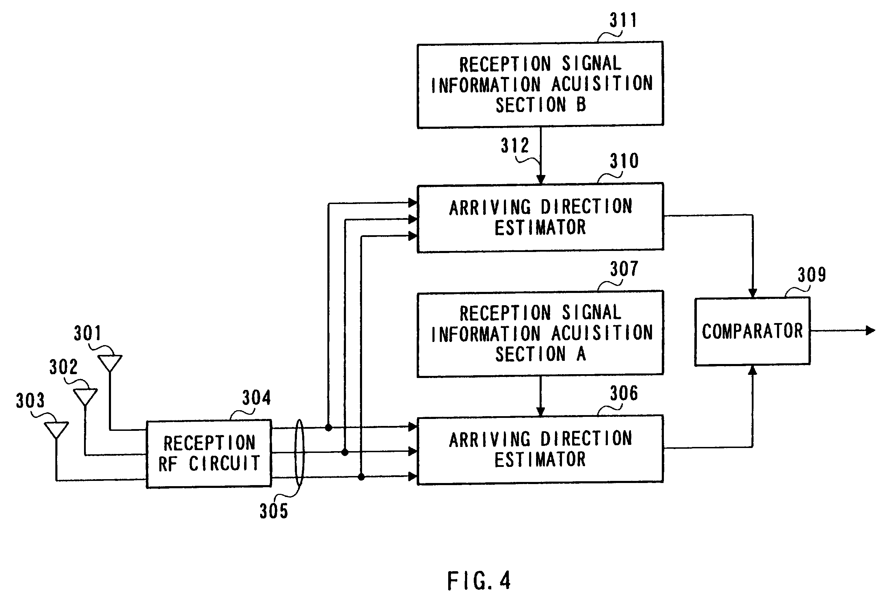

FIG.4 is a block diagram showing a configuration of directivity control determination circuit 116 in FIG.2. The base station apparatus according to Embodiment 2 of the present invention receives a signal from antennas 301 to 303 and performs amplification and frequency conversion in reception RF circuit 304. Regarding this reception signal 305, arriving direction estimator 306 estimates its arriving direction using information 308 of reception signal A input from reception signal information acquisition section 307A and outputs the result to comparator 309.

Likewise, regarding reception signal 305 above, arriving direction estimator 310 estimates its arriving direction using information 312 of reception signal B input from reception signal information acquisition section B311 and outputs the result to comparator 309.

Comparator 309 determines whether the arriving direction of reception signal A and the arriving direction of reception signal B almost match or not and this determination result is output to selector 113 as a control signal.

Embodiment 2 uses three antennas, but the present invention is not limited to this; the number of antennas can be any number greater than 1.

As shown above, directivity control determination circuit 116 estimates the arriving direction of the reception signal from terminal apparatus A202 and the arriving direction of the reception signal from terminal apparatus B203. If both arriving directions are nearly the same, directivity control determination circuit 116 determines that terminal apparatus A202 is located close to terminal apparatus B203 and controls so that selector 113 selects directivity information 115. In this way, transmission signal A101 and transmission signal B106 are transmitted with the same directivity.

On the other hand, if the arriving direction of the reception signal from terminal apparatus A202 is not nearly the same as the arriving direction from terminal apparatus B203, directivity control determination circuit 116 determines that terminal apparatus A202 is far from terminal apparatus B203 and controls so that selector 113 selects directivity information 112. In this way, transmission signal A101 is transmitted with the directivity created according to directivity information 112 and transmission signal B is transmitted with the directivity created according to directivity information 115.

As shown above, the base station apparatus according to Embodiment 2 of the present invention determines whether terminal apparatuses are close to or far from one another from the arriving direction of signals from the communication terminals and switches between the two directivities, making directivity switching easier.

### (Embodiment 3)

Then, the base station apparatus according to Embodiment 3 of the present invention is explained with reference to the attached drawings.

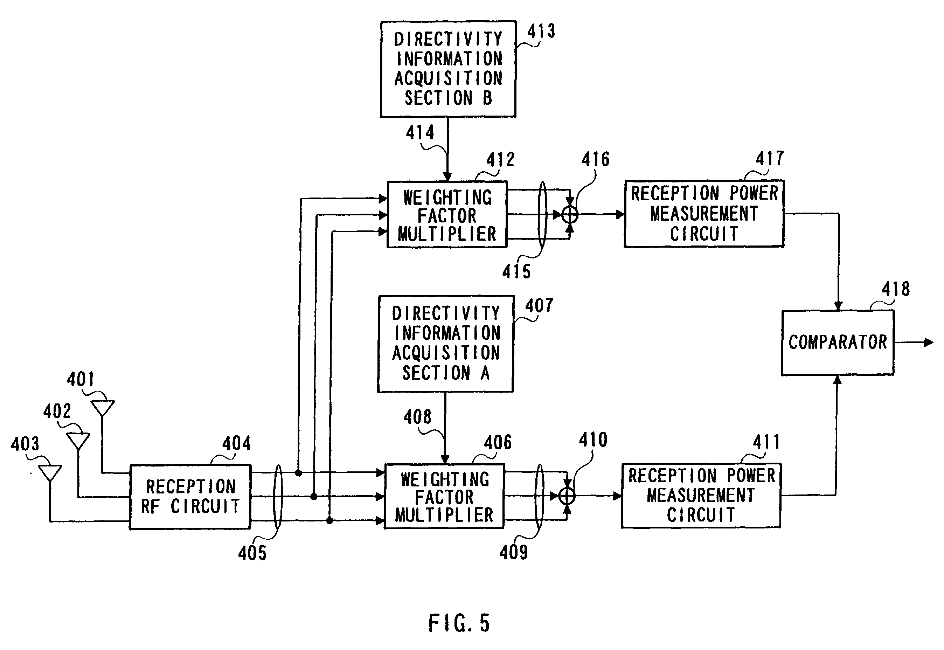

FIG.5 is a block diagram showing a configuration of directivity control determination circuit 116 in FIG.2. The base station apparatus according to Embodiment 3 of the present invention receives a signal from antennas 401 to 403 and performs amplification and frequency conversion in reception RF circuit 404. Weighting factor multiplier 406 multiplies reception signal 405 by directivity information 408, which is the same as the directivity information transmitted to terminal apparatus A, input from directivity information acquisition section 407.

Here, suppose the directivity information has a same value (factor) if the frequency of the transmission signal is the same as the frequency of the reception signal, and a value (factor) with a compensation for the frequency difference if the frequency of the transmission signal is different from the frequency of the reception signal.

Weighting factor multiplier 406 multiplies the reception signals by weighting factors for antennas 401 to 403 respectively and output these reception signals and these output signals 409 are added up by adder 410.

This allows the signals received from antennas 401 to 403 to be received with the same directivity as the directivity of transmission toward terminal apparatus A202. Reception power measurement circuit 411 measures reception power of this signal and outputs the measurement result to comparator 418.

Likewise, weighting factor multiplier 412 multiplies reception signals 405 by same directivity information 414 as the directivity information transmitted to terminal apparatus B input from directivity information acquisition section 413.

As mentioned above, suppose the directivity information is a same value (factor) if the frequency of the transmission signal is the same as the frequency of the reception signal and a value (factor) with a compensation for the frequency difference if the frequency of the transmission signal is different from the frequency of the reception signal.

Weighting factor multiplier 412 multiplies the reception signals by the weighting factors for antennas 401 to 403 respectively and output these reception signals and these output signals 415 are added up by adder 416.

This allows a signal received from antennas 401 to 403 to be received with the same directivity as the directivity of transmission toward terminal apparatus B203. Reception power measurement circuit 417 measures reception power of this signal, and outputs the measurement result to comparator 418.

Comparator 418 detects the difference between reception power measurement circuits 411 and 417 and compares this difference with a predetermined threshold. As a result of this comparison, if this difference is greater than the predetermined threshold, comparator 418 determines that the reception signals arrive from different directions, whereas if this difference is smaller than the predetermined threshold, comparator 418 determines that the reception signals arrive from the same direction.

That is, in FIG.3, base station apparatus 201 receives a signal from terminal apparatus A202 with same directivity 204 as the directivity with which a signal is transmitted to terminal apparatus A and measures the reception power (reception power 1: reception power with wide directivity). At the same time, base station apparatus 201 receives a signal from terminal apparatus A202 with same directivity 205 as the directivity with which a signal is transmitted to terminal apparatus B and measures the reception power (reception power 2: reception power with narrow directivity).

When viewed from base station apparatus 201, if terminal apparatus A202 and terminal apparatus B203 have different directions, reception power 1 (wide directivity) allows the transmission signal from terminal apparatus A202 to be reflected, but reception power 2 (narrow directivity) does not allow the transmission power from terminal apparatus A202 to be reflected.

On the contrary, when viewed from base station apparatus 201, if terminal apparatus A202 and terminal apparatus B203 have the same direction, both reception power 1 and reception power 2 can reflect the transmission signal from terminal apparatus A202. In this case, even when the narrow directivity is selected, transmission power of both terminal apparatuses can be reflected.

As shown above, the base station apparatus according to the present embodiment determines that terminal apparatus A202 is far from terminal apparatus B203 if the difference between reception power 1 and reception power 2 is greater than a predetermined threshold and determines that terminal apparatus A202 is close to terminal apparatus B203 if the difference between reception power 1 and reception power 2 is smaller than the predetermined threshold, making it easier to switch between two directivities.

Embodiment 3 uses three antennas, but the present invention is not limited to this; the number of antennas can be any number greater than 1.

### (Embodiment 4)

Then, the base station apparatus according to Embodiment 4 of the present invention is explained with reference to the attached drawings.

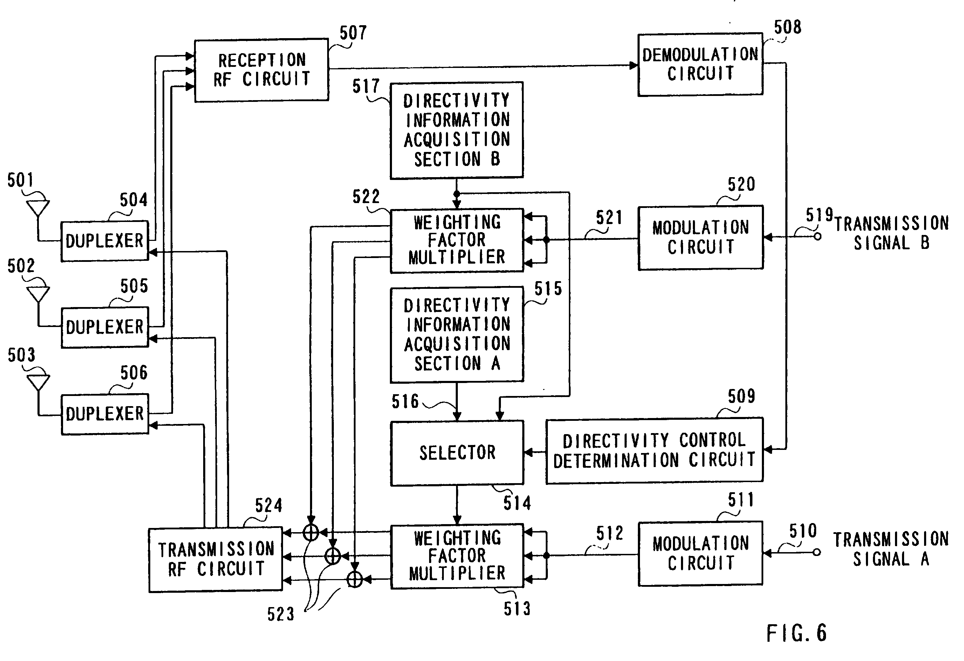

FIG.6 is a block diagram showing an overall configuration of the base station apparatus according to Embodiment 4 of the present invention. First, the reception operation is explained. A signal is received from antennas 501 to 503, passed through duplexers 504 to 506 and subjected to amplification and frequency conversion in reception RF circuit 507. Demodulation circuit 508 extracts the reception power information transmitted from terminal apparatus A202 and outputs this information to directivity control determination circuit 509, which will be described later.

Directivity control determination circuit 509 determines the following:
(1) In the case of transmission to terminal apparatus A202 with directivity 204, if both reception power 1 of a signal received with the same directivity as this directivity 204 and reception power 2 of the signal received with the same directivity 205 as the directivity with which a signal is transmitted to terminal apparatus B203 are equal to or greater than a predetermined value, the location of terminal apparatus A202 is considered to be close to the location of terminal apparatus B203, and therefore the directivity toward terminal apparatus A202 is switched to directivity 205.
(2) In the case of transmission to terminal apparatus A202 with directivity 205, if both reception power 1 and reception power 2 above are smaller than the predetermined value, the location of terminal apparatus A202 is considered to be far from the location of terminal apparatus B203, and therefore the directivity toward terminal apparatus A202 is switched to directivity 204.

Then, the transmission operation is explained. Transmission signal A510 is modulated by modulation circuit 511 and this modulated signal 512 is input to weighting factor multiplier 513. On the other hand, selector 514 selects either directivity information 516 input from directivity control information acquisition section A515 or directivity information 518 input from directivity control information acquisition section B517 based on a control signal input from directivity control determination circuit 509 and outputs to weighting factor multiplier 513.

Weighting factor multiplier 513 multiplies modulated transmission signal 512 by the directivity information input from selector 514. That is, weighting factor multiplier 513 multiplies modulated transmission signal 512 by weighting factors for antennas 501 to 503 and forms the directivity of transmission signal A510.

Furthermore, transmission signal B519 is modulated by modulation circuit 520 and this modulated transmission signal 521 is input to weighting factor multiplier 522. Weighting factor multiplier 522 multiplies modulated transmission signal 521 by directivity information 518 input from directivity information acquisition section B517. That is, weighting factor multiplier 522 multiplies modulated transmission signal 521 by weighting factors for antennas 501 to 503 and forms the directivity of transmission signal B519.

Adder 523 adds up transmission signals A510 and B519 with their respective directivities formed and the resulting signal is subjected to frequency conversion and amplification in transmission RF section 524 and transmitted via duplexers 504 to 506 from antennas 501 to 503.

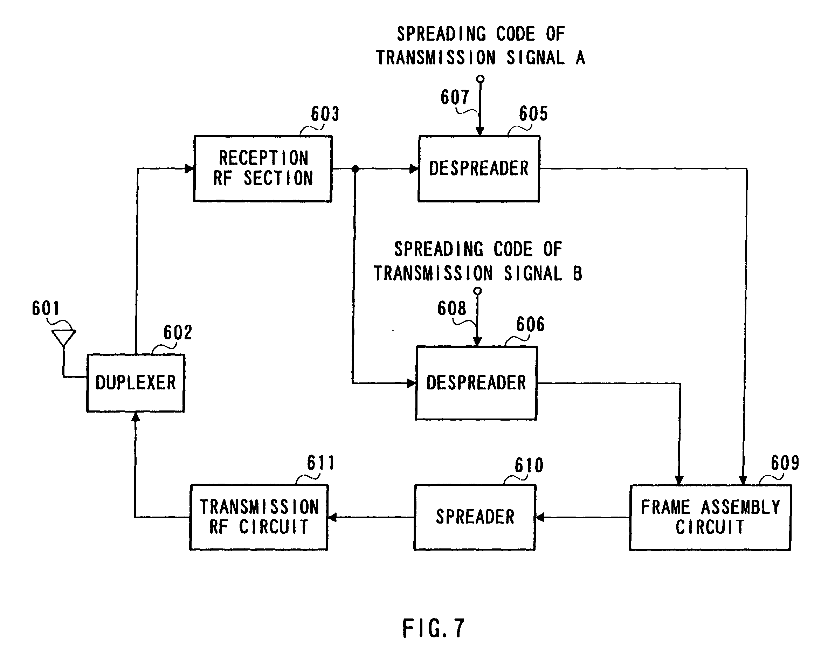

Then, a terminal apparatus that carries out a radio communication with the base station apparatus according to Embodiment 4 of the present invention is explained. FIG.7 is a block diagram showing an overall configuration of the terminal apparatus that carries out a radio communication with the base station apparatus according to Embodiment 4 of the present invention. A signal received from antenna 601 is input to reception RF section 611 via duplexer 602. Reception RF section 603 performs frequency conversion on the input signal to an IF signal or baseband signal and outputs this frequency-converted signal to despreader 605 and despreader 606. Despreader 605 despreads input signal 604 using spreading code 607 of transmission signal A. The power of this despreading result is the reception power (reception power 1) of the signal corresponding to terminal apparatus A202 that terminal apparatus A202 received from base station apparatus 201.

Despreader 606 despreads input signal 604 using spreading code 608 of transmission signal B. The power of this despreading result is the reception power (reception power 2) of the signal corresponding to terminal apparatus B203 that terminal apparatus A202 received from base station apparatus 201. Here, these spreading codes 607 and 608 are known to the terminal apparatuses.

Then, after frame assembly circuit 609 superimposes each reception power on a transmission frame, the signal is spread by spreader 610, subjected to frequency conversion and amplification by transmission RF section 611 and transmitted from antenna 601 via duplexer 602.

Since each terminal apparatus notifies the base station apparatus of its reception power, the base station apparatus can easily and reliably keep track of power with which each terminal apparatus receives a signal, making directivity switching easier.

As explained above, the present invention allows a communication apparatus carrying out a voice communication, etc. with small interference with other communication apparatuses to carry out a high-quality communication even if the communication apparatus is located in the same direction, viewed from the base station apparatus, as another communication apparatus carrying out a high-speed communication, etc. involving large interference with other communication apparatuses.

The present invention is not limited to the embodiments above, but can be implemented with various modifications. For example, the embodiments above explained the case where there are two terminal apparatuses in a service area of the base station apparatus, but the present invention can also be applied to cases where there are three or more terminal apparatuses in a service area of the base station apparatus.

This application is based on the Japanese Patent Application No.HEI 10-211458 filed on July 27, 1998, entire content of which is expressly incorporated by reference herein.

### Industrial Applicability

The present invention is applicable to a digital radio communication system using cellular telephones and cellular information terminals, etc.

## Claims

1. A base station apparatus comprising:
determining means for determining whether terminal apparatuses in a service area are located close to each other or not;
controlling means for controlling communication directivities, when the terminal apparatuses in the service area are located close to each other, so that these communication directivities become a directivity appropriate for transmission in a relatively narrow range; and
transmitting means for transmitting based on a spread spectrum communication system according to said communication directivity.

2. The base station apparatus according to claim 1, wherein said determining means determines, when the arriving directions of signals from said terminal apparatuses are almost the same, that these terminal apparatuses are located close to each other.

3. The base station apparatus according to claim 1, further comprising measuring means for measuring reception power of signals from said terminal apparatuses.

4. The base station apparatus according to claim 3, wherein said determining means determines, when the difference in reception power between the signals from said terminal apparatuses does not exceed a predetermined value, that said terminal apparatuses are located close to each other.

5. The base station apparatus according to claim 3, wherein said determining means determines, when all reception power values of signals from said terminal apparatuses exceed a predetermined value, that said terminal apparatuses are located close to each other.

6. The base station apparatus according to claim 1, further comprising receiving means for receiving signals including reception power values from said terminal apparatuses.

7. The base station apparatus according to claim 5, wherein said determining means determines, when the difference in reception power between the signals from said terminal apparatuses does not exceed a predetermined value, that said terminal apparatuses are located close to each other.

8. The base station apparatus according to claim 5, wherein said determining means determines, when all reception power values of signals from said terminal apparatuses exceed a predetermined value, that said terminal apparatuses are located close to each other.

9. A communication terminal apparatus comprising:
first despreading means for despreading a signal transmitted from a base station apparatus according to a spread spectrum communication system;
second despreading means for despreading signals transmitted from terminal apparatuses in a service area of said base station apparatus; and
transmitting means for transmitting reception power values based on the despreading results from said first and second despreading means.

10. A radio communication method comprising:
the determining step of determining whether terminal apparatuses in a service area are located close to each other or not;
the controlling step of controlling communication directivities, when the terminal apparatuses in the service area are located close to each other, so that these communication directivities become a directivity appropriate for transmission in a relatively narrow range; and
the transmitting step of transmitting based on a spread spectrum communication system according to said communication directivity.
